# NOUVEAU FASCICULE DE BREVET EUROPEEN

(11) **EP 0 506 805 B2**
(45) Date de publication et mention de la décision concernant l'opposition: **27.12.2000**
(45) Mention de la délivrance du brevet: 30.03.1994
(21) Numéro de dépôt: 91901806.9
(22) Date de dépôt: 17.12.1990
(51) Int. Cl.: B60K 6/02

(54) **GROUPE MOTO-PROPULSEUR POUR VEHICULES**
MOTOR-ANTRIEBSGRUPPE FÜR FAHRZEUGE
POWER UNIT FOR VEHICLES

(30) Priorité: 19.12.1989 LU 87644
(43) Date de publication de la demande: 07.10.1992
(73) Titulaire: LARGUIER, René, 92200 Neuilly-sur-Seine (FR)
(72) Inventeur: LARGUIER, René, 92200 Neuilly-sur-Seine (FR)
(74) Mandataire: Keib, Gérard
(86) Numéro de dépôt international: FR9000916
(87) Numéro de publication internationale: WO9108919

(56) Documents cités:
- EP-A- 0 082 932
- DE-A- 2 400 706
- DE-A- 2 943 519
- DE-A- 2 943 554
- FR-A- 2 356 304
- US-A- 4 148 192
- R. Miersh, S. Schustek, R. Wirtz: "VW Golf with a compact single shaft Diesel-Electric hybrid propulsion system", Ingénieurs de l'automobile, Juin 198, pages 112-118

## Description

La présente invention concerne un groupe moto-propulseur pour véhicules du type énoncé dans le préambule de la revendication 1.

La plupart des véhicules automobiles actuels à quatre ou deux roues sont propulsés par un moteur thermique qui utilise la détente d'un mélange carburant-comburant pour entraîner en rotation un arbre de sortie dont le mouvement est transmis aux roues du véhicule par des dispositifs de renvoi et de démultiplication.

Le démarrage de ce moteur thermique est assuré par un démarreur électrique qu'alimente une batterie. Au démarrage, la batterie fournit du courant au moteur du démarreur qui, par un réducteur et un système d'enclenchement approprié ("Bendix") entraîne la couronne d'un disque ou volant d'inertie solidaire de l'arbre moteur. Dès que le moteur thermique est lancé, le Bendix désaccouple le moteur du démarreur du disque d'inertie et l'entraînement de l'arbre est assuré par le seul moteur thermique.

Le moteur thermique entraîne par ailleurs un alternateur par un dispositif de renvoi qui comporte habituellement des poulies et des courroies. Cet alternateur fournit, par l'intermédiaire d'un dispositif électronique de régulation, un courant électrique qui permet de recharger la batterie.

Les ensembles de liaisons électromécaniques entre la batterie et le moteur thermique ci-dessus évoqués sont relativement complexes et constituent une source de pannes non négligeable.

Par ailleurs, leur utilisation est limitée aux fonctions de démarrage et de recharge de la batterie décrites ci-dessus.

On connaît, selon le US-A-4 148 192, un groupe moto-propulseur pour véhicule, comprenant un moteur thermique et un moteur électrique, tel qu'il puisse fonctionner sans être mécaniquement déconnecté du moteur thermique lorsque ce dernier tourne à sa vitesse de fonctionnement.

Ce brevet décrit un moteur à courant continu ayant son couple le plus élevé à l'arrêt. Ce ne peut être qu'un moteur série.

Ce brevet enseigne en outre l'utilisation de ce moteur en génératrice au moment du freinage du véhicule, ce qui n'est possible que si le moteur à courant continu n'est pas un moteur série. En effet, si, dans un moteur série on change le sens du courant, on inverse le sens du champ et le sens du courant d'induit et donc on ne change pas le sens du couple si bien que l'on retrouve un fonctionnement en moteur. Il y a donc incompatibilité entre cette caractéristique et la précédente.

Par ailleurs, l'article intitulé "VW GOLF with a compact single shaft Diesel-Electric hybrid propulsion system", par R. MIERSCH, S. SCHUSTEK et R. WIRTZ, paru dans la revue "INGENIEURS DE L'AUTOMOBILE", édition spéciale soixantenaire de la S.I.A., de Juin 1987, et sa version allemande "VW GOLF mit kompakten Einwellen-Diesel Elektro-Hybridantrieb", décrit un groupe moto-propulseur pour véhicule de type énoncé dans le préambule de la revendication 1, comprenant un moteur thermique n'ayant pas de volant d'inertie, et un moteur électrique coaxial avec celui-ci, tel qu'il puisse fonctionner sans être mécaniquement déconnecté du moteur thermique lorsque ce dernier tourne à sa vitesse de fonctionnement. Le moteur électrique comporte un stator et un rotor relativement plat, dimensionné de façon à présenter une inertie suffisante pour permettre un fonctionnement régulier du moteur thermique et pour pouvoir remplacer le volant d'inertie de celui-ci. Le moteur électrique est équipé de moyens de commande qui lui permettent de fonctionner comme générateur lorsqu'il est entraîné en rotation par le moteur thermique, ou comme moteur.

Le moteur Diesel décrit, qui a une cylindrée de 1,6 litre, a un arbre d'entraînement commun avec un moteur électrique triphasé asynchrone de 6 KW.

Le moteur Diesel a une puissance maximale de 40 KW et un couple maximum de 100 Nm.

Le moteur électrique présente une zone de vitesse de base de 6 à 2800 tours / min, une vitesse maximale de 6000 tours / min, une puissance à la sortie de l'arbre de 6 KW, un couple à la vitesse de base de 21 Nm, un poids de 8,5 kg, un diamètre extérieur de stator de 0,3 m, un diamètre intérieur du stator 0,25 m, une longueur axiale totale de 0,068 m, une longueur axiale du rotor de 0,028 m.

Le rotor est un rotor à cage d'écureuil. Le moteur électrique a 6 paires de pôles, et le courant du moteur est réglé à la fréquence et à l'amplitude nécessaires par un unique adaptateur de courant.

Un premier embrayage est prévu entre le moteur Diesel et le moteur électrique, et un second embrayage est prévu entre le moteur électrique et une boîte de vitesse classique.

Pour démarrer le moteur Diesel, les deux embrayages sont déconnectés, on démarre le moteur électrique et on le fait tourner jusqu'a atteindre une vitesse de démarrage qui peut varier entre 825 et 1300 tours / mn suivant la température du moteur. On actionne ensuite le premier embrayage situé entre le moteur Diesel et le moteur électrique, et on démarre le moteur Diesel en utilisant l'énergie cinétique du moteur électrique. Le processus est le même pour un moteur à essence de 1600 cm³ de cylindrée qui a une puissance maximale de 55 KW et un couple maximum de 125 Nm.

Une telle procédure de démarrage n'est pas acceptable pour un véhicule classique destiné à être vendu au public.

Le but de l'invention est de remédier aux inconvénients du groupe moto-propulseur connu décrit dans l'article mentionné ci-dessus, et de proposer un groupe moto-propulseur du type précité comportant un moteur électrique capable de démarrer le moteur thermique en direct, par son couple.

Suivant l'invention, le groupe moto-propulseur du type précité est caractérisé en ce que le rotor du moteur électrique a un rapport diamètre sur épaisseur égal ou supérieur à quatre et en ce que le moteur électrique est conçu de façon telle qu'il présente à vitesse nulle et à faible vitesse de rotation un couple moteur qui soit, d'une part, supérieur au couple résistant opposé par le moteur thermique a l'arrêt et, d'autre part, au moins deux fois supérieur à son couple nominal, de telle sorte que le moteur électrique peut ainsi servir de démarreur pour mettre en route le moteur thermique même aux plus basses températures

Par couple résistant du moteur, on entend le couple nécessaire pour vaincre les frottements du moteur et la compression qui est réalisée dans les cylindres.

Un tel moteur électrique peut ainsi servir de démarreur pour mettre en route le moteur thermique. Toutefois, contrairement aux démarreurs classiques, ce moteur électrique peut être accouplé en permanence avec le moteur thermique et tourner en même temps que ce dernier.

L'invention offre en outre plusieurs opportunités. Tout particulièrement, la circulation du courant vers la batterie peut être inversée, le moteur électrique pourra alors fournir un couple important venant s'ajouter à celui du moteur thermique puisque les circuits sont dimensionnés pour le courant de démarrage.

A titre d'exemple, le couple d'appoint pourra être, à vitesse zéro, d'un ordre de grandeur comparable à celui du couple maximum du moteur thermique alors qu'aux basses vitesses le moteur thermique a un couple faible : l'appoint peut donc être proportionnellement important.

Le moteur électrique sera ainsi un véritable 〈〈 booster 〉〉 au démarrage, pour la circulation en ville, pour les fortes montées, pour les véhicules tous terrains, etc. Même si ce couple diminue avec la vitesse, il restera cependant très utile pour améliorer les 〈〈 reprises 〉〉 du véhicule à partir d'une vitesse assez basse.

Selon une version préférée de l'invention, la puissance du moteur électrique est suffisante pour entraîner le véhicule au moins à vitesse réduite. Ce moteur électrique peut entraîner le véhicule indépendamment du moteur thermique par exemple en cas de panne de celui-ci ou en association avec le moteur. Il aura cependant le handicap d'avoir à faire tourner le moteur thermique qui constitue un frein.

Par contre, si un dispositif de désaccouplement est prévu entre l'arbre de sortie du moteur thermique et le moteur électrique, le handicap ci-dessus est supprimé.

L'entraînement du véhicule est ainsi réalisé par le moteur électrique seul, par exemple en ville, sans bruit et sans pollution.

Ce système peut être complété par son symétrique : freinage ou ralentissement (par exemple en descente) avec recharge supplémentaire de la batterie.

Bien entendu, la batterie devra être dimensionnée pour le fonctionnement ainsi prévu. Une deuxième batterie à une tension pouvant être différente pourra être utilisée. Pour les poids lourds un ralentisseur serait donc disponible et fournirait de l'énergie pour recharger la batterie, au lieu de chauffer fortement dans les descentes. A la montée, un appoint de couple serait disponible.

Selon l'une des versions de l'invention, le moteur électrique est lié axialement à l'arbre de sortie du moteur thermique.

Le moteur électrique tourne ainsi à la même vitesse que le moteur thermique.

Dans ce cas, le moteur électrique est simplement intercalé entre le moteur thermique et les organes de transmission du véhicule. Lorsque ce moteur électrique remplit simultanément les fonctions de démarreur, volant d'énergie, alternateur, propulseur additionnel ou indépendant, on aboutit à un groupe moto-propulseur à la fois compact, de construction peu onéreuse et apportant des avantages substantiels par rapport aux conceptions classiques.

Le moteur électrique utilise de préférence le principe de la réluctance variable saturée. De tels moteurs sont relativement plats et présentent donc un encombrement axial peu important.

Un tel moteur plat peut ainsi remplacer le volant d'inertie du moteur thermique sans entraîner une augmentation substantielle de l'encombrement axial du moteur thermique, tout en assurant les fonctions complémentaires décrites ci-dessus.

Toutes ces variantes permettent d'éliminer démarreur, Bendix, disque d'inertie et sa denture pour l'action du démarreur, alternateur, poulies et courroies correspondantes. De plus, le collecteur et le contacteur du démarreur manipulant des courants élevés sont remplacés par une électronique de puissance très fiable et des circuits de contrôle à courant faible ne posant aucun problème.

D'autres particularités et avantages de l'invention apparaîtront encore dans la description ci-après. Aux dessins annexés, donnés à titre non limitatif :
- la figure 1 illustre schématiquement un groupe moto-propulseur conforme à l'invention,
- la figure 2 est une vue partielle en plan d'un moteur électrique utilisable pour mettre en oeuvre l'invention,
- la figure 3 illustre schématiquement une variante de réalisation d'un groupe moto-propulseur,
- la figure 4 illustre schématiquement une autre variante de réalisation.

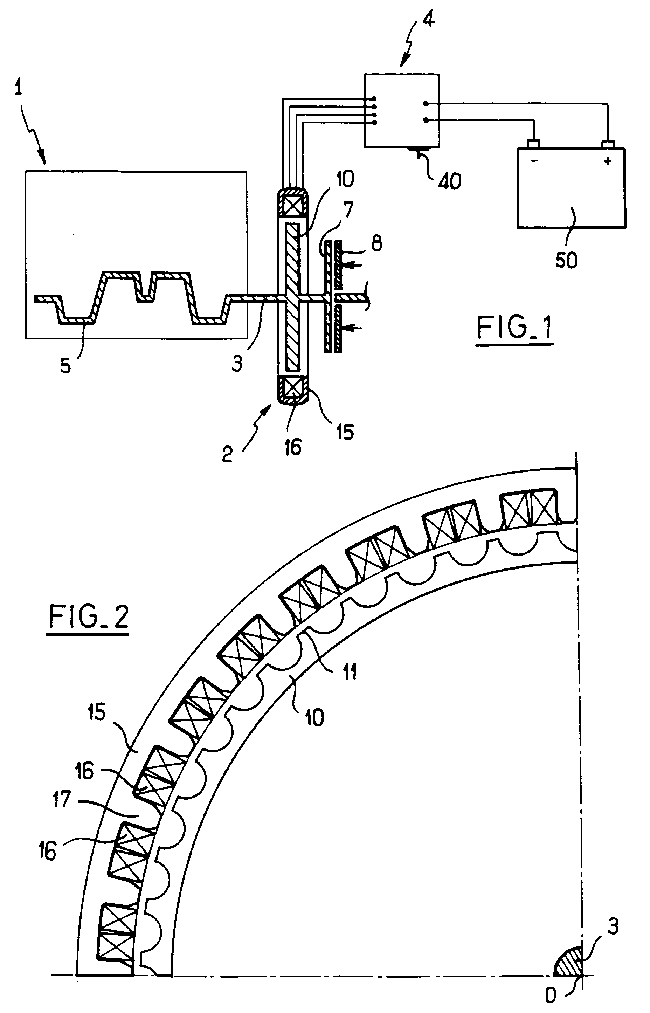

Sur la figure 1, on a représenté schématiquement un groupe moto-propulseur selon l'invention. Un moteur thermique 1 agit sur un vilebrequin 5 pour entraîner en rotation un arbre de sortie 3. L'extrémité de l'arbre 3 est reliée à un disque d'embrayage 7 solidaire de l'arbre 3. Un second disque d'embrayage 8 relié à des dispositifs de transmission non représentés peut s'engager sur le premier disque 7 ou s'en désengager pour réaliser les fonctions habituelles d'embrayage/débrayage des dispositifs de transmission.

Entre la sortie du moteur thermique 1 et le disque d'embrayage 7, un moteur électrique 2 est monté directement sur l'arbre 2. Par "directement", on entend que le rotor 10 du moteur électrique 2 est solidaire de l'arbre 3. Plus précisément, ce rotor 10 a la forme générale d'un disque perpendiculaire à l'arbre 3 et centré sur ce dernier. En plus du rotor 10, le moteur électrique 2 comprend un stator 15 qui comporte des bobinages 16. Le stator 15 a la forme d'une couronne qu s'étend autour du rotor 10.

L'alimentation des bobinages 16 du stator 15 est effectuée par des circuits électroniques compris dans des moyens de commande 4. Ces moyens de commande 4 sont aussi reliés à la batterie 50 et ils peuvent être manipulés par l'utilisateur par un bouton 40 ou tout autre moyen.

Les moyens de commande 4 et les circuits électroniques correspondant sont prévus pour faire fonctionner le moteur 2 dans différents modes :
- en mode démarreur ; un courant circule dans les bobinages 16 pour entraîner le rotor 10. Ce rotor 10 exerce un couple suffisant pour lancer le moteur thermique 1 ;
- en mode appoint ; le moteur thermique 1 entraînant l'arbre 3, on envoie un courant dans le stator 15 pour fournir un couple sur l'arbre 3 dans le même sens que le couple du moteur thermique 1 ;
- en mode alternateur ; le moteur thermique 1 entraîne l'arbre 3 et une fraction de l'énergie mécanique de rotation du rotor 10 est transformée par le moteur électrique 2 en courant qui s'établit dans les bobinages 16 ; un régulateur de charge incorporé dans les moyens de commande 4 permet alors de recharger la batterie 50 ;
- en mode ralentisseur/freinage ; le moteur thermique 1 fonctionnant, on envoie un courant dans les bobinages 16 du stator 15 de sorte que le moteur électrique 2 fournit un couple antagoniste qui freine la rotation de l'arbre 3.

Ainsi, le montage illustré par la figure 1 peut accomplir les fonctions habituellement remplies par le disque d'inertie, le démarreur, l'alternateur ainsi que tous les circuits électriques et dispositifs mécaniques de renvoi associés. Il peut, en plus fournir un supplément de couple au moteur thermique 1, particulièrement souhaitable à bas régime. Il peut aussi contribuer au freinage du véhicule sans donner lieu à un échauffement excessif car l'énergie mécanique transformée au cours de ce freinage peut l'être sous forme électrique et servir à recharger la batterie. Pour cette dernière application, il peut s'avérer utile de modifier la batterie 50 par rapport aux batteries conventionnelles ou de prévoir une seconde batterie. Pour toutes les autres applications, une batterie traditionnelle permet d'utiliser le moteur électrique 2 dans toutes les fonctions citées.

Pour réaliser cette invention, un moteur électrique particulièrement adapté est un moteur à réluctance variable saturée. Ces moteurs sont décrits en détail dans les brevets français 1 445 572, 2 109 144, 2 356 304. Sur la figure 2, on a représenté un exemple où le rotor 10 a la forme d'un disque et où le stator 15 forme une couronne en périphérie du rotor 10. Sur cette figure, on voit un quart du stator 15 et du rotor 10. L'ensemble est centré au point O qui est aussi situé au centre de l'arbre 3 qui est solidaire du rotor 10.

Le pourtour du rotor 10 présente des dents 11 espacées régulièrement et formées dans un matériau magnétique. Le stator 15 présente, en regard du rotor 10, une série de plots 17 espacés régulièrement. Chaque plot 17 est entouré par une bobine 16. Le rotor 10 est entraîné en rotation par l'effet des flux magnétiques créés dans les plots 17 par le courant circulant dans les bobines 16 et qui traversent les dents 11 du rotor 10. L'alimentation en courant des bobines 16 est effectuée par des circuits électroniques de commande qui, dans l'exemple de la figure 1 sont inclus dans les moyens de commande 4.

Ces moteurs électriques à réluctance variable saturée peuvent délivrer un couple nominal élevé pour un encombrement réduit. Une caractéristique qui les rende particulièrement adaptés à l'utilisation dans un groupe propulseur conforme à l'invention est qu'ils présentent un couple supérieur à basse vitesse. Ainsi, le couple à vitesse nulle peut être plus de deux fois supérieur au couple nominal. Cela leur donne une efficacité maximum au démarrage et lors de "reprises" à bas régime.

Par ailleurs, ces moteurs sont relativement plats (rapport diamètre sur épaisseur égal ou supérieur à 4 et souvent 6).

D'autre part, ce type de moteur ne pose aucun problème de tolérance au niveau du jeu mécanique. En effet, l'entrefer rotor-stator correspond à une différence de rayon de plusieurs dixièmes de millimètres alors que le jeu du vilebrequin 5 est typiquement de l'ordre de quelques centièmes de millimètre.

De manière avantageuse, les bobines 16 du stator 15 peuvent être regroupées en plusieurs groupes alimentés indépendamment par des circuits de commande indépendants.

De cette manière, la défaillance d'un circuit de commande ne se traduit pas par une avarie complète du moteur électrique 2 car elle n'affecte pas les circuits correspondant aux autres groupes.

A titre d'exemple, pour une voiture de petite cylindrée (couple maximum de 150 Nm) dont le disque d'inertie fait 280 mm de diamètre pour 22 mm d'épaisseur et dont le couple de "décollage" doit atteindre également 150 Nm, la réalisation peut se présenter ainsi :
- Diamètre du rotor : 280 mm comme le disque d'inertie ;
- Epaisseur du circuit magnétique : 40 mm ;
- Couple au démarrage : 150 Nm même lorsque la batterie est aux plus basses températures demandées (par ex. - 40°C) ;
- Diamètre extérieur 350 mm ;
- Variation de la tension de sortie pratiquement jusqu'à zéro par autoexcitation contrôlée ;
- Nombre de bobines du stator : 36 ;
- Pour des raisons de sécurité d'emploi, les bobines sont regroupées en 3 groupes de 12 alimentées séparément. Ainsi une coupure d'un des circuits permet d'obtenir 100 Nm avec les 2 autres et permet le démarrage en dehors des cas extrêmes ;
- Alimentation de chaque groupe de bobines par 4 transistors ou thyristors et 4 diodes ;
- Nombre de dents du rotor 51 ;
- Circuits de contrôle permettant d'utiliser les mêmes semi-conducteurs lors du fonctionnement en alternateur ;
- Le rotor peut être massif ou creux en son centre (diamètre maximum de ce creux 240 mm) pour être emmanché sur un cylindre en acier ordinaire.

Sans rentrer dans les détails, dans beaucoup de véhicules, l'embrayage ou le convertisseur de couple est contigu au disque d'inertie. La présence d'un composant électriquement actif à la place de ce disque permet de repenser certains problèmes de contrôle de l'embrayage en étant capable de fournir du courant au sous-ensemble tournant avec le moteur.

C'est ainsi que, grâce à la présente invention, on peut disposer sur le rotor 10 des boucles électriques destinées à la circulation d'un courant induit par le champ magnétique créé par les bobines 16 du stator 15. On peut de cette manière obtenir des circuits électriques actifs sur la partie tournante qui peuvent être exploités notamment pour réaliser un couplage électromagnétique entre les disques d'embrayage 7 et 8. On aboutit ainsi à une simplification considérable des mécanismes d'embrayage qui sont traditionnellement complexes et d'une fiabilité limitée.

Dans une autre version de l'invention, le moteur électrique 2 est conformé pour fournir une mesure instantanée de la vitesse de rotation ou de la position angulaire du rotor 10 et par conséquent de l'arbre 3 et du vilebrequin 5.

La détection de la vitesse de rotation de l'arbre est exploitable pour fournir une information fiable au conducteur au niveau du compte-tours et du compteur kilométrique. La détection de la position angulaire peut être judicieusement employée pour synchroniser des actions au niveau du moteur thermique 1 telles que l'admission du mélange carburant-comburant, l'échappement des gaz produits par la combustion ou encore l'étincelle dans le cas d'un moteur à bougies. Une telle synchronisation est réalisable par des montages électroniques simples.

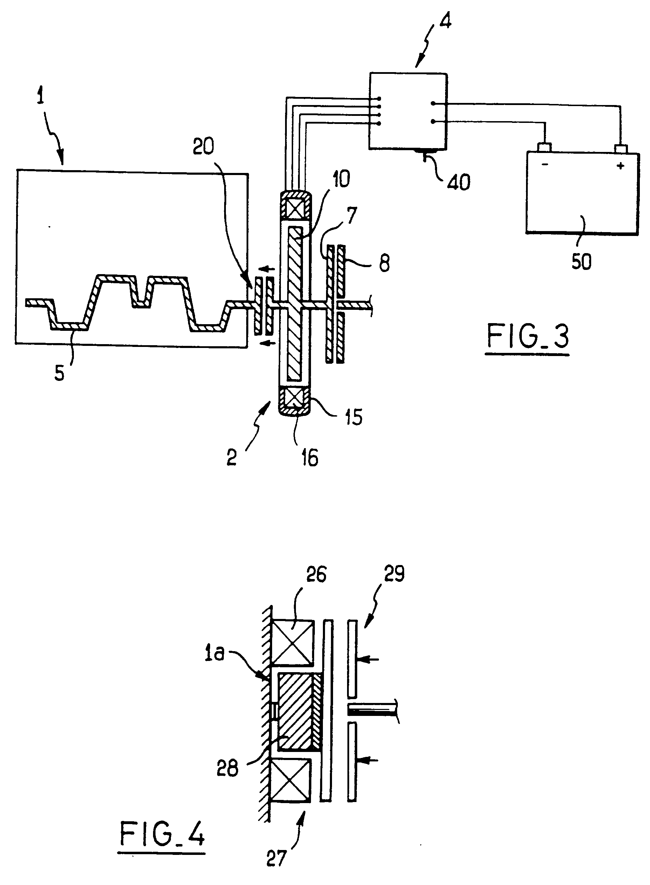

Dans la réalisation de la figure 3, le groupe moto-propulseur comprend en outre, entre le moteur thermique 1 et le rotor 10 du moteur électrique 2, un dispositif de désaccouplement 20 tel qu'un embrayage.

Ce dispositif permet lorsqu'il est désaccouplé, de faire fonctionner le véhicule uniquement avec le moteur électrique 2. Le véhicule peut ainsi circuler en ville sans bruit, ni pollution, avec une autonomie qui dépend de la batterie.

Dans l'exemple de réalisation de la figure 5, le stator 26 du moteur électrique 27 est fixé directement à la face arrière la du moteur thermique, tandis que le rotor 28 qui remplace le volant d'inertie du moteur thermique est monté axialement et directement à l'un des plateaux de l'embrayage 29. Cette disposition permet de rendre le groupe moto-propulseur plus compact et de réaliser une économie appréciable.

Bien entendu, l'invention n'est pas limitée aux exemples de réalisation que l'on vient de décrire et on peut apporter à celui-ci de nombreuses modifications sans sortir du cadre de l'invention.

Ainsi, le rotor du moteur électrique pourrait comporter un transducteur permettant de transmettre un signal électrique dépendant de la rotation du rotor et dont la puissance est suffisante pour réaliser une fonction de commande, telle que le fonctionnement d'un dispositif de désaccouplement.

D'autre part le moteur électrique pourrait être adapté pour pouvoir entraîner un train de roue différent de celui du moteur thermique, ce qui permet un fonctionnement en quatre roues motrices sur terrain difficile.

## Revendications

1. Groupe moto-propulseur pour véhicule, comprenant un moteur thermique (1) n'ayant pas de volant d'inertie, et un moteur électrique (2) coaxial avec celui-ci, tel qu'il puisse fonctionner sans être mécaniquement déconnecté du moteur thermique lorsque ce dernier tourne à sa vitesse de fonctionnement, le moteur électrique (2) comportant un stator (15, 26) et un rotor (10, 28) relativement plat, dimensionné de façon à présenter une inertie suffisante pour permettre un fonctionnement régulier du moteur thermique (1) et pour pouvoir remplacer le volant d'inertie de celui-ci, le moteur électrique étant équipé de moyens de commande qui lui permettent de fonctionner comme générateur lorsqu'il est entraîné en rotation par le moteur thermique, ou comme moteur, caractérisé en ce que le rotor (10, 28) du moteur électrique (2) a un rapport diamètre sur épaisseur égal ou supérieur à quatre et en ce que le moteur électrique (2) est conçu de façon telle qu'il présente à vitesse nulle et à faible vitesse de rotation un couple moteur qui soit, d'une part, supérieur au couple résistant opposé par le moteur thermique (1) à l'arrêt et, d'autre part, au moins deux fois supérieur à son couple nominal, de telle sorte que le moteur électrique (2) peut ainsi servir de démarreur pour mettre en route le moteur thermique même aux plus basses températures.

2. Groupe moto-propulseur conforme à la revendication 1, caractérisé en ce que la puissance du moteur électrique (2) est suffisante pour entraîner le véhicule au moins à vitesse réduite.

3. Groupe moto-propulseur conforme à la revendication 1 ou 2, caractérisé en ce que le moteur électrique (2) est adapté pour fonctionner en ralentisseur du véhicule et récupérateur d'énergie lors du freinage de celui-ci pour recharger la ou les batteries (50).

4. Groupe moto-propulseur conforme à l'une des revendications 1 à 3, caractérisé en ce que le moteur électrique (1) est lié axialement à l'arbre de sortie (3) du moteur thermique (1).

5. Groupe moto-propulseur conforme à l'une des revendications 1 à 4, caractérisé en ce qu'un dispositif de désaccouplement (20) est prévu entre l'arbre de sortie (3) du moteur thermique (1) et le moteur électrique (2).

6. Groupe moto-propulseur conforme à l'une des revendications 1 à 5, caractérisé en ce que le stator (26) du moteur électrique (27) est monté directement sur la face (1a) du moteur thermique.

7. Groupe moto-propulseur conforme à la revendication 6, caractérisé en ce que le rotor (28) du moteur électrique (27) est fixé directement et axialement à une partie du dispositif de désaccouplement (29) ou de transmission de vitesse vers les roues motrices du véhicule.

8. Groupe moto-propulseur conforme à l'une des revendications 1 à 7, caractérisé en ce que le moteur électrique (2) utilise le principe de la réluctance variable saturée.

9. Groupe moto-propulseur conforme à l'une des revendications 1 à 8, caractérisé en ce que le rotor (10) du moteur électrique (2) comporte au moins une boucle électrique dans laquelle peut s'établir un courant électrique d'induction lorsque le moteur électrique (2) est alimenté.

10. Groupe moto-propulseur conforme à la revendication 9, caractérisé en ce que le courant induit qui s'établit dans ladite boucle électrique sur le rotor (10) est exploitée pour réaliser un couplage électromagnétique de l'arbre (3) sur des dispositifs de transmission.

11. Groupe moto-propulseur conforme à l'une des revendications 1 à 10, caractérisé en ce que le rotor du moteur électrique (2) comporte un transducteur permettant de transmettre un signal électrique dépendant de la rotation du rotor et dont la puissance est suffisante pour réaliser une fonction de commande.

12. Groupe moto-propulseur conforme à la revendication 11, caractérisé en ce que ledit signal électrique commande le fonctionnement d'un dispositif de désaccouplement.

## Claims

1. A vehicle power unit comprising a heat engine (1) without any inertia flywheel, and an electric motor (2) coaxial to said heat engine such that it can operate without being mechanically disconnected from the heat engine (1) when the latter rotates at its operating speed, the electric motor (2) comprising a stator (15, 26) and a relatively flat rotor (10, 28) so dimensioned as to present a sufficient inertia to allow regular operation of the heat engine (1) and to be able to replace the inertia flywheel thereof, the electric motor being fitted with control means which allow it to operate as a generator when rotated by the heat engine (1) or as an engine, characterised in that the electric engine rotor (10, 28) has a diameter-to-thickness ratio at least equal to four, and in that the electric motor (2) is designed so that it has a drive torque at zero speed and at low speed of rotation which is, on the one hand, greater than the resistive torque of the heat engine (1) when stopped, and on the other hand, at least twice greater than its nominal torque, so that the electric motor (2) can be used as the starter of the heat engine (1), even at the lowest temperatures.

2. A power unit according to claim 1 characterised in that the power of the electric motor (2) is sufficient to drive the vehicle at least at reduced speed.

3. A power unit according to claim 1 or 2 characterised in that the electric motor (2) is adapted to operate as a vehicle retarder and recover the energy on vehicle braking to recharge the or each battery (50).

4. A power unit according to any one of claims 1 to 3, characterised in that the electric motor (1) is axially connected to the output shaft (3) of the heat engine (1).

5. A power unit according to any one of claims 1 to 4, characterised in that a decoupling device (20) is provided between the output shaft (3) of the heat engine (1) and the electric motor (21).

6. A power unit according to any one of claims 1 to 5, characterised in that the stator (26) of the electric motor (27) is mounted directly on the face (1a) of the heat engine.

7. A power unit according to claim 6, characterised in that the rotor (28) of the electric motor (27) is mounted directly and axially on a part of the device (29) for decoupling or transmission to the vehicle drive wheels.

8. A power unit according to any one of claims 1 to 7, characterised in that the electric motor (2) uses the principle of saturated variable reluctance.

9. A power unit according to any one of claims 1 to 8, characterised in that the rotor (10) of the electric motor (2) comprises at least one electric loop in which an inductive electric current can be established when the electric motor (2) is powered.

10. A power unit according to claim 9, characterised in that the induced current established in the electric loop on the rotor (10) is used to provide electromagnetic coupling of the shaft (3) on transmission means.

11. A power unit according to any one of claims 1 to 10, characterised in that the rotor of the electric motor (2) comprises a transducer for transmission of an electrical signal dependent on the rotation of the rotor and the power of which is sufficient to provide a control function.

12. A power unit according to claim 11, characterised in that the said electrical signal controls the operation of a decoupling device.

## Patentansprüche

1. Antriebsanlage für ein Fahrzeug, mit einem Verbrennungsmotor (1) ohne Schwungrad und einem Elektromotor (2), der mit dem Verbrennungsmotor koaxial ist, so daß er ohne mechanisches Abkuppeln von dem Verbrennungsmotor (1) arbeiten kann, wenn sich letzterer mit seiner Betriebsdrehzahl dreht, wobei der Elektromotor (2) aus einem Stator (15, 26) und einem relativ ebenen Rotor (10,28) besteht, der derart bemessen ist, daß er eine Trägheit besitzt, die ausreicht, um einen gleichmäßigen Betrieb des Verbrennungsmotors zu ermöglichen, und um dessen Schwungrad ersetzen zu können, wobei der Elektromotor (2) mit Steuerungsmitteln ausgerüstet ist, die dem Elektromotor erlauben, daß er, oder als Stromerzeuger wenn er von dem Verbrennungsmotor (1) in Drehung versetzt wird, oder als Motor, arbeitet, dadurch gekennzeichnet, daß der Rotor (10) des Elektromotors (2) ein Verhältnis des Durchmessers zu der Dicke gleich oder über vier hat, und daß der Elektromotor (2) so bemessen ist, daß er bei nuller Drehzahl oder bei niedriger Drehzahl ein Antriebsdrehmoment aufweist, das, einerseits, höheres als das Widerstandsmoment des Verbrennungsmotors (1) im Abstellen, und anderseits, mindestens zweimal höheres als seines Nominalsmoment ist, so daß der Elektromotor (2) als Anlasser, um den Verbrennungsmotor (1) ebenfalls bei den tiefesten Temperaturen anzulassen dienen kann.

2. Antriebsanlage nach Anspruch 1 dadurch gekennzeichnet, daß die Leistung des Elektromotors (2) ausreicht, um das Fahrzeug zumindest mit verringerter Geschwindigkeit anzutreiben.

3. Antriebsanlage nach Anspruch 1 oder 2, dadurch gekennzeichnet, daß der Elektromotor (2) als Verzögerungsvorrichtung des Fahrzeugs und als Energierückgewinnungsvorrichtung bei dessen Abbremsen arbeiten kann, um die Batterie(n) (50) aufzuladen.

4. Antriebsanlage nach einem der Ansprüche 1 bis 3, dadurch gekennzeichnet, daß der Elektromotor (2) axial an die Abtriebswelle (3) des Verbrennungsmotors (1) gekuppelt ist.

5. Antriebsanlage nach einem der Ansprüche 1 bis 4, dadurch gekennzeichnet, daß zwischen der Abtriebswelle (3) des Verbrennungsmotors (1) und dem Elektromotor (21) eine Auskupplungsvorrichtung (20) vorgesehen ist

6. Antriebsanlage nach einem der Ansprüche 1 bis 5, dadurch gekennzeichnet, daß der Stator (26) des Elektromotors (27) direkt auf der Stirnfläche (1a) des Verbrennungsmotors angebracht ist.

7. Antriebsanlage nach Anspruch 6, dadurch gekennzeichnet, daß der Rotor (28) des Elektromotors (27) direkt und axial auf einem Abschnitt der Vorrichtung (29) zum Auskuppeln oder zum Übertragen der Drehzahl auf die Antriebsräder des Fahrzeugs angebracht ist.

8. Antriebsanlage nach einem der Ansprüche 1 bis 7, dadurch gekennzeichnet, daß der Elektromotor (2) nach dem Prinzip des gesättigten variablen magnetischen Widerstandes arbeitet.

9. Antriebsanlage nach einem der Ansprüche 1 bis 8, dadurch gekennzeicnet, daß der Rotor (10) des Elektromotors (2) mindestens eine Kurzschlußwindung umfaßt, in der ein elektrischer Induktionsstrom entstehen kann, wenn der Elektromotor (2) versorgt wird.

10. Antriebsanlage nach Anspruch 9, dadurch gekennzeichnet, daß der induzierte Strom, der in der Kuzschlußwindung auf dem Rotor (10) entsteht, ausgenützt wird, um eine elektromagnetische Kupplung der Welle (3) mit Übertragungsvorrichtungen zu erhalten.

11. Antriebsanlage nach einen der Ansprüche 1 bis 10, dadurch gekennzeichnet, daß der Rotor des Elektromotors (2) einen Meßwandler aufweist, womit ein von der Drehung des Rotors abhängiges elektrisches Signal übertragen werden kann, dessen Leistung ausreicht, um eine Steuerungsfunktion zu erfüllen.

12. Antriebsanlage nach Anspruch 11, dadurch gekennzeichnet, daß das elektrische Signal den Betrieb einer Auskupplungsvorrichtung steuert.
